# EUROPEAN PATENT APPLICATION

(11) **EP 3 670 942 A1**
(43) Date of publication of application: **24.06.2020**
(21) Application number: 19212639.9
(22) Date of filing: 29.11.2019
(51) Int. Cl.: F16C 27/04, F01D 25/04, F01D 25/16, F01D 21/04, F16C 19/52

(54) **BEARING ASSEMBLY INCLUDING ACTIVE VIBRATION CONTROL**

(30) Priority: 17.12.2018 GB 201820518
(71) Applicant: Rolls-Royce plc, London N1 9FX (GB)
(72) Inventor: Digoude, Julien, Derby, Derbyshire DE24 8BJ (GB); Kirby, Andrew, Derby, Derbyshire DE24 8BJ (GB); Gan, Zi Jie, Derby, Derbyshire DE24 8BJ (GB)
(74) Representative: Rolls-Royce plc

(57) **Abstract**

A bearing assembly (40) for a rotatable shaft, the bearing assembly comprising: a bearing housing (42); a bearing located within the bearing housing having an axis of rotation and arranged to receive a rotatable shaft (50); a first spring bar (52) that couples the bearing to the bearing housing, the first spring bar being configured to tune vibrations of the rotatable shaft; and a first piezoelectric actuator (54) disposed between the bearing housing and the first spring bar, the first piezoelectric actuator being configured to extend in a first direction, wherein extension of the piezoelectric actuator in the first direction displaces the first spring bar relative to the bearing housing.

## Description

### Field of the disclosure

The present disclosure relates to a gas turbine engine having a bearing assembly for a rotatable shaft, and a method of minimising out-of-balance vibrations in a bearing assembly of a gas turbine engine.

### Background of the disclosure

Gas turbine engines can suffer from mechanical issues related to unbalanced rotors within the engine. These mechanical issues occur particularly frequently for high pressure rotors (e.g. rotors used in high pressure turbines). The length of the rotor combined with the presence of a gearbox acting as a heat source creates an uneven temperature gradient across the high pressure rotor during engine shutdown which causes the rotor to thermally distort (e.g. bow).

Bowing of the high pressure rotor can lead to unbalance vibrations due to the eccentricity of its centre of mass from the bearing rotational axis. Between start-up of the gas turbine engine and idling of the gas turbine engine, this eccentricity is amplified by a resonant vibration mode. This results in amplified unbalance vibrations which can lead to tip rub issues, where the blades of the high pressure turbine may rub against a surface of the engine core. To accommodate for tip rub issues a larger tip clearance may be provided. However, this is undesirable as the provision of a large tip clearance detrimentally affects the efficiency of the gas turbine engine. Unbalance vibrations also have a detrimental impact on the lifespan of engine components, and contribute to increased noise production of the engine.

Previously-considered solutions for out-of-balance vibrations include the provision of squeeze film dampers between the bearing receiving the high pressure rotor the bearing housing. In some prior art solutions spring bars are provided between the bearing and the bearing housing (multiple spring bars can be combined into a single component referred to in the art as a 'squirrel cage'). The spring bars / squirrel cage tune the vibration modes to occur at specific predetermined frequencies, which makes it easier to damp the out-of-balance vibrations.

However, such solutions merely comprise passive vibration control techniques, which are only capable of preventing tip rub issues up to a limit. Beyond this limit the tip clearance has to be increased to an extent such that specific fuel consumption of the engine is severely impacted.

Alternatively, a barring motor can be provided, but this is undesirable as it adds weight to the gas turbine engine.

### Summary of the disclosure

The present disclosure describes an active vibration control technique in which the centre of mass of a rotatable shaft (e.g. a high pressure rotor for a gas turbine engine) can be repositioned within the bearing housing, either prior to engine switch on, or during operation of the engine when resonant vibration modes emerge. This acts to prevent vibrations from occurring at the source, as opposed to damping vibrations.

According to a first aspect there is provided a gas turbine engine having a bearing assembly for a rotatable shaft, the bearing assembly comprising: a bearing housing; a bearing located within the bearing housing having an axis of rotation and arranged to receive a rotatable shaft; a first spring bar that couples the bearing to the bearing housing, the first spring bar being configured to tune vibrations of the rotatable shaft; and a first piezoelectric actuator disposed between the bearing housing and the first spring bar, the first piezoelectric actuator being configured to extend in a perpendicular direction to the axis of rotation of the bearing, wherein extension of the piezoelectric actuator in the first direction displaces the first spring bar relative to the bearing housing.

Displacing the spring bar relative to the bearing housing allows the bearing to be moved relative to the housing. This can cause an unbalanced rotatable shaft received in the bearing to align its centre of mass to the axis of rotation of the bearing. This minimizes vibrations caused by the rotation of the shaft.

This arrangement gives a larger radial deflection of the first spring bar per unit extension of the piezoelectric actuator when compared with arrangements in which the first direction is non-perpendicular to the axis of rotation of the bearing.

In some examples, the first spring bar is configured to act as a lever between the bearing housing and the bearing.

This arrangement gives a large radial deflection of the first spring bar per unit extension of the first piezoelectric actuator. By attaching one end of the first spring bar to the bearing housing at a pivot point, mechanical leverage can be utilised to a greater or lesser extent as required by locating the first piezoelectric actuator closer to or further from the pivot point. Generally, piezoelectric actuators are capable of applying a large amount of force but only for a very limited range of extension. The use of the spring bar as a lever allows the displacement of the spring bar at the actuator to be multiplied at the point at which the spring bar supports the bearing.

In some examples, the bearing assembly further comprises a squeeze film disposed between the first spring bar and the bearing housing.

The squeeze film acts as a vibration damper between the bearing and the bearing housing.

In some examples, the bearing assembly further comprises: a second spring bar that couples the bearing to the bearing housing at a position on the opposite side of the axis of rotation of the bearing to the first spring bar, the second spring bar being configured to tune vibrations of the rotatable shaft; and a second piezoelectric actuator disposed between the bearing housing and the second spring bar, the second piezoelectric actuator being configured to extend in a second direction, wherein extension of the second piezoelectric actuator in the second direction displaces the second spring bar relative to the bearing housing.

In some examples, the second direction is anti-parallel to the first direction.

Locating the piezoelectric actuators on opposite sides of the axis of rotation of the bearing and arranging them to extend in opposite directions allows each actuator only to be required to exert a force in their respective extending direction. The first piezoelectric actuator does not need to exert a tension force on the first spring bar, as this force will be provided by the second piezoelectric actuator acting on the second spring bar. Similarly, the second piezoelectric actuator does not need to exert a tension force on the second spring bar, as this force will be provided by the first piezoelectric actuator acting on the first spring bar.

In some examples, the bearing assembly further comprises: a third spring bar that couples the bearing to the bearing housing, the third spring bar being configured to tune vibrations of the rotatable shaft; a third piezoelectric actuator disposed between the bearing housing and the third spring bar, the third piezoelectric actuator being configured to extend in a third direction; a fourth spring bar that couples the bearing to the bearing housing, the fourth spring bar being configured to tune vibrations of the rotatable shaft; a fourth piezoelectric actuator disposed between the bearing housing and the fourth spring bar, the fourth piezoelectric actuator being configured to extend in a fourth direction, wherein extension of the third piezoelectric actuator in the third direction displaces the third spring bar relative to the bearing housing, wherein extension of the fourth piezoelectric actuator in the fourth direction displaces the fourth spring bar relative to the bearing housing, and wherein the third spring bar and the fourth spring bar couple the bearing to the bearing housing at positions opposite one another with respect to the axis of rotation of the bearing.

In some examples, the fourth direction is anti-parallel to the third direction.

In some examples, the first spring bar, the second spring bar, the third spring bar and the fourth spring bar are equally spaced around the bearing

By providing third and fourth spring bars and associated piezoelectric actuators on opposite sides of the axis of rotation of the bearing a further axis of movement of the bearing may be provided. Arranging this axis to be perpendicular to the axis defined by the first and second directions, by spacing the first, second, third and fourth spring bars equally around the bearing, gives full adjustability of the centre of mass of the rotatable shaft in two dimensions, i.e. in the plane orthogonal to the axis of rotation of the bearing.

In some examples, the bearing assembly further comprises: an accelerometer arranged to provide an output proportional to the magnitude of vibrations received at the bearing housing; and a controller coupled to the accelerometer and the, or each, piezoelectric actuator, and configured to control extension of the, or each, piezoelectric actuator to minimize the output of the accelerometer.

By providing a controller capable of extending the, or each, actuator the spring bar(s) and, hence, the bearing may be moved in response to the output of the accelerometer. As the output of the accelerometer is proportional to the magnitude of the vibrations, a minimum in the output of the accelerometer corresponds to the bearing moving to a position in which the centre of mass of the rotatable shaft is aligned with the axis of rotation the bearing.

The gas turbine engine may further comprise: an engine core comprising a turbine, a compressor, and a core shaft connecting the turbine to the compressor; a fan located upstream of the engine core, the fan comprising a plurality of fan blades; and a gearbox that receives an input from the core shaft and outputs drive to the fan so as to drive the fan at a lower rotational speed than the core shaft.

Optionally, the turbine is a first turbine, the compressor is a first compressor, and the core shaft is a first core shaft; the engine core further comprises a second turbine, a second compressor, and a second core shaft connecting the second turbine to the second compressor; and the second turbine, second compressor, and second core shaft are arranged to rotate at a higher rotational speed than the first core shaft.

According to a second aspect there is provided a method of minimising out-of-balance vibrations in a bearing assembly of a gas turbine engine, the bearing assembly comprising: a bearing housing; a bearing located within the bearing housing having an axis of rotation and arranged to receive a rotatable shaft; a first spring bar that couples the bearing to the bearing housing, the first spring bar being configured to tune vibrations of the rotatable shaft; and a first piezoelectric actuator between the bearing housing and the first spring bar, the first piezoelectric actuator being configured to extend in a first direction; the method comprising the steps of: rotating the bearing within the bearing housing; detecting the magnitude of vibrations received at the bearing housing due to rotation of the bearing; and extending the piezoelectric actuator in the first direction to displace the first spring bar relative to the bearing housing to reduce the magnitude of the vibrations received at the bearing housing.

In some examples, the bearing assembly comprises: a second spring bar that couples the bearing to the bearing housing at a position on the opposite side of the axis of rotation of the bearing to the first spring bar, the second spring bar being configured to tune vibrations of the rotatable shaft; and a second piezoelectric actuator disposed between the bearing housing and the second spring bar, the second piezoelectric actuator being configured to extend in a second direction, the method further comprising the step of: extending the second piezoelectric actuator in the second direction to displace the second spring bar relative to the bearing housing to reduce the magnitude of the vibrations received at the bearing housing.

In some examples, the bearing assembly comprises: a third spring bar that couples the bearing to the bearing housing, the third spring bar being configured to tune vibrations of the rotatable shaft; a third piezoelectric actuator between the bearing housing and the third spring bar, the third piezoelectric actuator being configured to extend in a third direction; a fourth spring bar that couples the bearing to the bearing housing at a position on the opposite side of the axis of rotation of the bearing to the third spring bar, the fourth spring bar being configured to tune vibrations of the rotatable shaft; and a fourth piezoelectric actuator disposed between the bearing housing and the fourth spring bar, the fourth piezoelectric actuator being configured to extend in a fourth direction, the method further comprising the step of: extending the third piezoelectric actuator in the third direction to displace the third spring bar relative to the bearing housing to reduce the magnitude of the vibrations received at the bearing housing; and extending the fourth piezoelectric actuator in the fourth direction to displace the fourth spring bar relative to the bearing housing to reduce the magnitude of the vibrations received at the bearing housing.

In some examples, the step of detecting the amplitude of vibrations received at the bearing housing due to rotation of the bearing is performed by an accelerometer coupled to the bearing housing and arranged to provide an output proportional to the magnitude of vibrations received at the bearing housing.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.
The gearbox is a reduction gearbox (in that the output to the fan is a lower rotational rate than the input from the core shaft). Any type of gearbox may be used. For example, the gearbox may be a "planetary" or "star" gearbox, as described in more detail elsewhere herein. The gearbox may have any desired reduction ratio (defined as the rotational speed of the input shaft divided by the rotational speed of the output shaft), for example greater than 2.5, for example in the range of from 3 to 4.2, for example on the order of or at least 3, 3.1, 3.2, 3.3, 3.4, 3.5, 3.6, 3.7, 3.8, 3.9, 4, 4.1 or 4.2. The gear ratio may be, for example, between any two of the values in the previous sentence. A higher gear ratio may be more suited to "planetary" style gearbox. In some arrangements, the gear ratio may be outside these ranges.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350 cm, 360 cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg⁻¹K⁻¹/(ms^{- 1})²). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, 17, 17.5, 18, 18.5, 19, 19.5 or 20. The bypass ratio may be in an inclusive range bounded by any two of the values in the previous sentence (i.e. the values may form upper or lower bounds). The bypass duct may be substantially annular. The bypass duct may be radially outside the engine core. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160 kN, 170 kN, 180 kN, 190 kN, 200 kN, 250 kN, 300 kN, 350 kN, 400 kN, 450 kN, 500 kN, or 550 kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 °C (ambient pressure 101.3 kPa, temperature 30 °C), with the engine static.
In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400 K, 1450 K, 1500 K, 1550 K, 1600 K or 1650 K. The TET at cruise may be in an inclusive range bounded by any two of the values in the previous sentence (i.e. the values may form upper or lower bounds). The maximum TET in use of the engine may be, for example, at least (or on the order of) any of the following: 1700 K, 1750 K, 1800 K, 1850 K, 1900 K, 1950 K or 2000 K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based material or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 14, 16, 18, 20, 22, 24, or 26 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000 m to 15000 m, for example in the range of from 10000 m to 12000 m, for example in the range of from 10400 m to 11600 m (around 38000 ft), for example in the range of from 10500 m to 11500 m, for example in the range of from 10600 m to 11400 m, for example in the range of from 10700 m (around 35000 ft) to 11300 m, for example in the range of from 10800 m to 11200 m, for example in the range of from 10900 m to 11100 m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 °C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### Brief description of the drawings

Embodiments will now be described by way of example only, with reference to the Figures, in which:
**Figure 1** is a sectional side view of a gas turbine engine;
**Figure 2** is a close up sectional side view of an upstream portion of a gas turbine engine;
**Figure 3** is a partially cut-away view of a gearbox for a gas turbine engine;
**Figure 4** is a cross-sectional view of an example bearing assembly; and
**Figure 5** shows the cross-section Z-Z shown in Figure 4.

### Detailed description

Aspects and embodiments of the present disclosure will now be discussed with reference to the corresponding drawings. Other aspects and embodiments will be apparent to those skilled in the art.

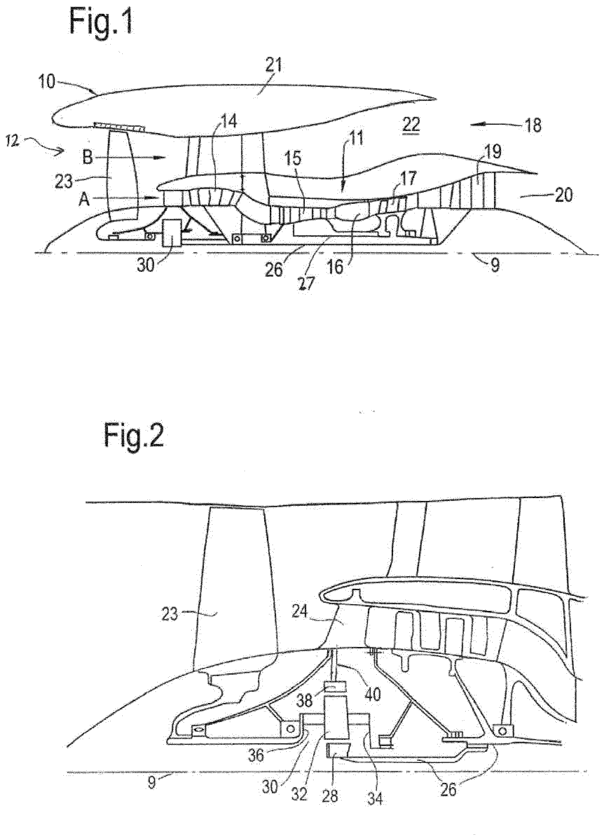

**Figure 1** illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the core exhaust nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in **Figure 2****.** The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

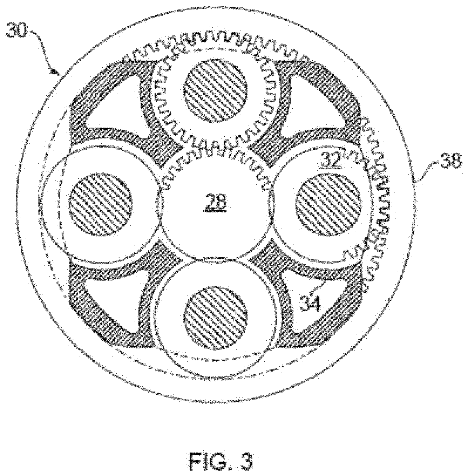

The epicyclic gearbox 30 is shown by way of example in greater detail in **Figure 3****.** Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 18, 20 meaning that the flow through the bypass duct 22 has its own nozzle 18 that is separate to and radially outside the core exhaust nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

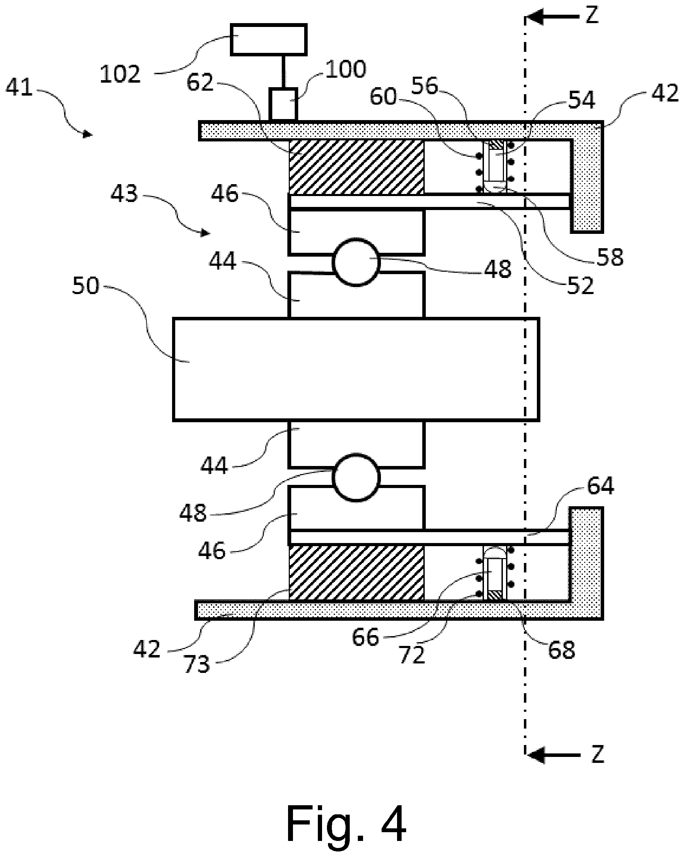

**Figure 4** schematically shows a cross sectional view of a bearing assembly 41.

The bearing assembly 41 comprises a bearing housing 42. A bearing 43 is located within the bearing housing 42, the bearing 43 comprising an inner race 44, having an outer groove, an outer race 46, having an inner groove, and ball bearings 48 received between the inner race 44 and outer race 46 in the inner and outer grooves. While ball bearings 48 are used in the embodiment of Fig. 4 it should be noted that any suitable type of bearing could be used in practice.

A rotatable shaft 50 is received in the bearing. The inner race 44 is received over and attached to the rotatable shaft 50.

A first spring bar 52 couples the bearing 43 to the bearing housing 42. An end of the first spring bar 52 is connected to the outer race 46. An opposite end of the first spring bar 52 is connected to the bearing housing 42.

The inner race 44 is arranged to rotate relative to the outer race 46 by virtue of the ball bearings 48, and so the bearing has an axis of rotation. As the inner race 44 is received over and attached to the rotatable shaft 50, and the outer race 46 is connected to the bearing housing 42 via the first spring bar 52, it can be seen that the rotatable shaft 50 is arranged to rotate in the bearing 43 relative to the bearing housing 42. The axis of rotation of the bearing 43 is arranged along a horizontal direction in the orientation shown in Figure 4.

A first piezoelectric actuator 54 is disposed between the bearing housing 42 and the first spring bar 52. The first piezoelectric actuator 54 is configured to extend in a first direction. In the embodiment shown in Fig. 4, the first direction is perpendicular to the axis of rotation of the bearing 43, and in the orientation shown in Fig. 4 is a downward direction. Extension of the first piezoelectric actuator 54 causes displacement of the first spring bar 52 relative to the bearing housing 42.

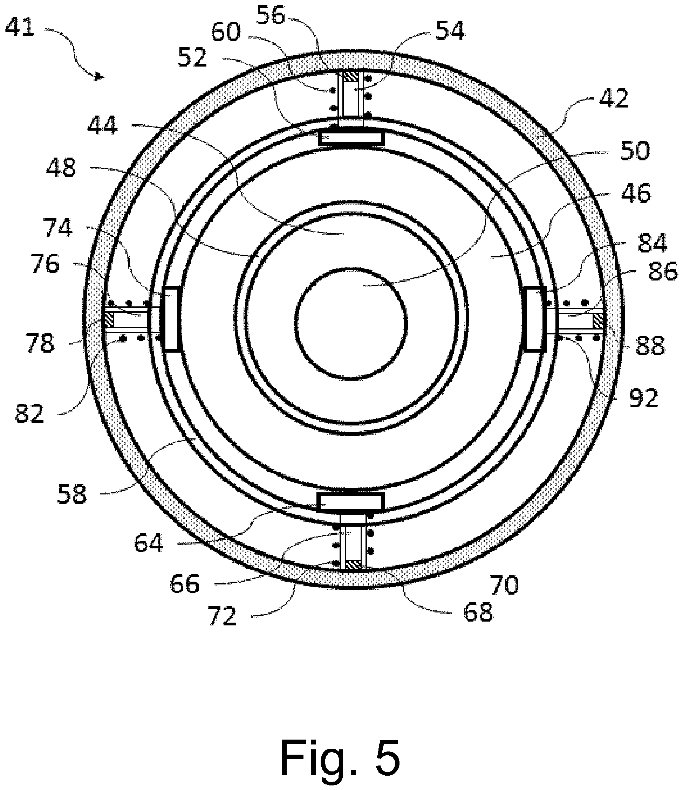

The first piezoelectric actuator 54 comprises an inline force sensor 56 at its interface with the bearing housing 42. The first piezoelectric actuator 54 is coupled to a mounting ring 58 at its interface with the first spring bar 52. As can be best seen in **Figure 5**, the mounting ring 58 circumferentially surrounds the spring bars. Each piezoelectric actuator exerts a force on the mounting ring 58 when it extends or retracts.

A preload spring 60 is disposed around the first piezoelectric actuator 54. The preload spring 60 is coupled to the bearing housing 42 and exerts a predetermined force on the first spring bar 52. As the preload spring 60 is wound around the first piezoelectric actuator 54, the predetermined force is exerted on the first spring bar 52 against the first direction. The predetermined force exerted by the preload spring 60 is set so as to compress the piezoelectric actuator 54 to a neutral point, wherein an application of voltage will, depending on polarity, either cause an extension towards its original length or retraction towards its minimum acceptable length. This ensures that the piezoelectric actuator 54 normally remains in compression, which extends the life of the piezoelectric actuator 54.
A squeeze film 62 is provided between the first spring bar 52 and the bearing housing 42. The squeeze film 62 acts to dampen vibrations caused by the rotation of the rotatable shaft 50.

A similar arrangement is provided between the bearing 43 and the bearing housing 42 at a position diametrically opposite the first spring bar 52.

A second spring bar 64 couples the bearing to the bearing housing 42. An end of the second spring bar 64 is connected to the outer race 46. An opposite end of the second spring bar 64 is connected to the bearing housing 42.

The inner race 44 is arranged to rotate relative to the outer race 46 by virtue of the ball bearings 48. As the inner race 44 is received over and attached to the rotatable shaft 50, and the outer race 46 is connected to the bearing housing 42 via the second spring bar 64, it can be seen that the rotatable shaft 50 is arranged to rotate in the bearing 43 relative to the bearing housing 42. The axis of rotation of the bearing 43 is arranged along a horizontal direction in the orientation shown in Figure 4.

A second piezoelectric actuator 66 is disposed between the bearing housing 42 and the second spring bar 64. The second piezoelectric actuator 66 is configured to extend in a second direction. In the embodiment shown in Figure 4 the second direction is also perpendicular to the axis of rotation of the bearing 43, but is opposed (i.e. anti-parallel) to the first direction. Thus, in the orientation shown in Figure 4 the second direction is an upward direction. Extension of the second piezoelectric actuator 66 causes displacement of the second spring bar 64 relative to the bearing housing 42.

The second piezoelectric actuator 66 comprises an inline force sensor 68 at its interface with the bearing housing 42. The second piezoelectric actuator 66 is coupled to the mounting ring 58 at its interface with the second spring bar 64.

A preload spring 72 is disposed around the second piezoelectric actuator 66. The preload spring 72 is coupled to the bearing housing 42 and exerts a predetermined force on the second spring bar 64. As the preload spring 72 is wound around the second piezoelectric actuator 66, the predetermined force is exerted on the second spring bar 64 against the second direction. The predetermined force exerted by the preload spring 72 is set so as to compress the piezoelectric actuator 64 to a neutral point, wherein an application of voltage will, depending on polarity, either cause an extension towards its original length or retraction towards its minimum acceptable length. This ensures that the piezoelectric actuator 64 normally remains in compression, which extends the life of the piezoelectric actuator 64.

A squeeze film 73 is provided between the second spring bar 64 and the bearing housing 42. The squeeze film 73 acts to dampen vibrations caused by the rotation of the rotatable shaft 50.

An accelerometer 100 is coupled to the bearing housing 42 and arranged to detect vibrations of the bearing housing 42. The accelerometer 100 is configured to produce an output which is proportional to the magnitude of the detected vibrations. The accelerometer 100 is communicatively coupled to a controller 102. While a coupling is a wired connection in the embodiment shown in Figure 4, a wireless connection could equally be used. The operation of the controller 102 will be described in more detail below.

Figure 5 shows the cross-section Z-Z shown in Figure 4. Like reference numerals have been retained where appropriate.

In the view of Figure 5, two further piezoelectric actuators are visible, i.e. a third piezoelectric actuator 76 and a fourth piezoelectric actuator 86.

A third spring bar 74 couples the bearing 43 to the bearing housing 42. An end of the third spring bar 74 is connected to the outer race 46. An opposite end of the third spring bar 74 is connected to the bearing housing 42.

The inner race 44 is arranged to rotate relative to the outer race 46 by virtue of the ball bearings 48. As the inner race 44 is received over and attached to the rotatable shaft 50, and the outer race 46 is connected to the bearing housing 42 via the third spring bar 74, it can be seen that the rotatable shaft 50 is arranged to rotate in the bearing 43 relative to the bearing housing 42. The axis of rotation of the bearing 43 is into, or out of, the page in the orientation shown in Figure 5.

A third piezoelectric actuator 76 is disposed between the bearing housing 42 and the third spring bar 74. The third piezoelectric actuator 76 is configured to extend in a third direction. In the embodiment shown in Figure 5 the third direction is a rightward direction. Extension of the third piezoelectric actuator 76 causes displacement of the third spring bar 74 relative to the bearing housing 42.

The third piezoelectric actuator 76 comprises an inline force sensor 78 at its interface with the bearing housing 42. The third piezoelectric actuator 76 is coupled to the mounting ring 58 at its interface with the third spring bar 74.

A preload spring 82 is disposed around the third piezoelectric actuator 76. The preload spring 82 is coupled to the bearing housing 42 and exerts a predetermined force on the third spring bar 74. As the preload spring 82 is wound around the third piezoelectric actuator 76, the predetermined force is exerted on the third spring bar 74 against the third direction. The predetermined force exerted by the preload spring 82 is set so as to compress the piezoelectric actuator 76 to a neutral point, wherein an application of voltage will, depending on polarity, either cause an extension towards its original length or retraction towards its minimum acceptable length. This ensures that the piezoelectric actuator 76 normally remains in compression, which extends the life of the piezoelectric actuator 76.

A fourth spring bar 84 couples the bearing to the bearing housing 42. An end of the fourth spring bar 84 is connected to the outer race 46. An opposite end of the fourth spring bar 84 is connected to the bearing housing 42.

The inner race 44 is arranged to rotate relative to the outer race 46 by virtue of the ball bearings 48. As the inner race 44 is received over and attached to the rotatable shaft 50, and the outer race 46 is connected to the bearing housing 42 via the fourth spring bar 84, it can be seen that the rotatable shaft 50 is arranged to rotate in the bearing 43 relative to the bearing housing 42. The axis of rotation of the bearing 43 is into, or out of, the page in the orientation shown in Figure 5.

A fourth piezoelectric actuator 86 is disposed between the bearing housing 42 and the fourth spring bar 84. The fourth piezoelectric actuator 86 is configured to extend in a fourth direction. In the embodiment shown in Figure 5 the fourth direction is a leftward direction, i.e. anti-parallel to the third direction. Extension of the fourth piezoelectric actuator 86 causes displacement of the fourth spring bar 84 relative to the bearing housing 42.
The fourth piezoelectric actuator 86 comprises an inline force sensor 88 at its interface with the bearing housing 42. The fourth piezoelectric actuator 86 is coupled to the mounting ring 58 at its interface with the fourth spring bar 84.

A preload spring 92 is disposed around the fourth piezoelectric actuator 86. The preload spring 92 is coupled to the bearing housing 42 and exerts a predetermined force on the fourth spring bar 84. As the preload spring 92 is wound around the fourth piezoelectric actuator 86, the predetermined force is exerted against the fourth spring bar 84 in the third direction. The predetermined force exerted by the preload spring 92 is set so as to compress the piezoelectric actuator 86 to a neutral point, wherein an application of voltage will, depending on polarity, either cause an extension towards its original length or retraction towards its minimum acceptable length. This ensures that the piezoelectric actuator 86 normally remains in compression, which extends the life of the piezoelectric actuator 86.

As can be seen in Figure 5, the first, second, third and fourth spring bars 52, 64, 74, 84 are evenly spaced around the circumference of the bearing and evenly spaced around the interior of the bearing housing 42 when viewed along an axial direction of the rotatable shaft 50. This is an especially useful configuration as the first, second, third and fourth piezoelectric actuators are arranged in two opposing pairs. The first and second piezoelectric actuators are arranged to extend in opposite directions to move the bearing up and down within the bearing housing 42. The third and fourth piezoelectric actuators are arranged to extend in opposite directions to move the bearing left and right within the bearing housing 42. By providing opposing pairs of actuators, each piezoelectric actuator needs to apply a substantial force only when it extends. It does not also need to apply a substantial tension force as it retracts, as this can be provided by the other actuator in the actuator pair. This force can be at least partially transmitted over the mounting ring 58. The mounting ring 58 transfers forces between the piezoelectric actuators and the bearing along the respective extension / retraction axes of each piezoelectric actuator.

In the configuration shown in Figure 5, the bearing 43, and hence the rotatable shaft 50 can be moved in two dimensions in the Z-Z plane, i.e. an orthogonal plane to the axis of rotation of the bearing. If the centre of mass of the rotatable shaft 50 does not initially align with the axis of rotation of the rotatable shaft then the bearing can be moved in the Z-Z plane until the centre of mass of the rotatable shaft 50 does align with the axis of rotation of the bearing. This results in reduced vibrations arising from the rotation of the rotatable shaft.

As described above with reference to Figure 4, an accelerometer 100 is coupled to the bearing housing 42. The accelerometer is configured to produce an output which is proportional to the magnitude of vibrations of the bearing housing 42. The accelerometer 100 is communicatively coupled to a controller 102.

The controller 102 is coupled to the first piezoelectric actuator 54, the second piezoelectric actuator 66, the third piezoelectric actuator 76 and the fourth piezoelectric actuator 86, and is configured to be able to operate each of the actuators to cause them to extend or retract along their respective directions. The controller 102 comprises a memory storing logic, wherein said logic includes a feedback loop which checks the output of the accelerometer 100, extends or retracts one or more of the actuators, and then re-checks the output of the accelerometer 100. Using this loop the controller 102 acts to minimize the output of the accelerometer 100. The minimum of the output of the accelerometer corresponds to the centre of mass of the rotatable shaft 50 being positioned at the axis of rotation of the bearing.

The bearing assembly described with reference to Figures 4 and 5 has particular effectiveness where the rotatable shaft 50 comprises a high pressure rotor of a gas turbine engine, such as the gas turbine engine described with reference to Figures 1-3.

The bearing assembly may make use of resonant vibration modes occurring within the operational range of the engine. When the engine operates within a resonant vibration mode the stiffness of the spring bar is reduced, which, in turn, reduces the force required to displace the spring bar. Consequently, a smaller piezoelectric actuator can be used. The use of a smaller piezoelectric actuator reduces the packaging size of the actuator, as well as the weight of the actuator.

The bearing housing described above may be a housing of a gas turbine engine, such as an intermediate casing. While the housing 42 is shown as a single housing that supports the spring bars, the actuators and the squeeze films, in practice each of these components could be supported by a separate housing, or some subsets of the components could be supported by common housings.

While the above example includes four piezoelectric actuators, any number of piezoelectric actuators could be used.

Additionally, while in the example described above each actuator acts on a respective discrete spring bar, in some embodiments a unitary squirrel cage component could be provided between the bearing and the bearing housing. In this case, the squirrel cage effectively comprises a number of spring bars extending between annular end portions that join the ends of the spring bars together. Each actuator may act on a spring bar of the squirrel cage. The cage could comprise perforations to increase its flexibility.

It will be understood that the invention is not limited to the embodiments above-described and various modifications and improvements can be made without departing from the concepts described herein within the scope of the following claims. Except where mutually exclusive, any of the features may be employed separately or in combination with any other features and the disclosure extends to and includes all combinations and sub-combinations of one or more features described herein.

## Claims

1. A gas turbine engine (10) having a bearing assembly (40) for a rotatable shaft, the bearing assembly comprising:
a bearing housing (42);
a bearing (43) located within the bearing housing having an axis of rotation and arranged to receive a rotatable shaft (50);
a first spring bar (52) that couples the bearing to the bearing housing, the first spring bar being configured to tune vibrations of the rotatable shaft; and
a first piezoelectric actuator (54) disposed between the bearing housing and the first spring bar, the first piezoelectric actuator being configured to extend in a perpendicular direction to the axis of rotation of the bearing,
wherein extension of the piezoelectric actuator in the first direction displaces the first spring bar relative to the bearing housing.

2. The gas turbine engine according to claim 1, wherein the first spring bar (52) is configured to act as a lever between the bearing housing (42) and the bearing.

3. The gas turbine engine according to claim 1 or 2, further comprising:
a second spring bar (64) that couples the bearing to the bearing housing (42) at a position on the opposite side of the axis of rotation of the bearing to the first spring bar (52), the second spring bar being configured to tune vibrations of the rotatable shaft (50); and
a second piezoelectric actuator (66) disposed between the bearing housing and the second spring bar, the second piezoelectric actuator being configured to extend in a second direction,
wherein extension of the second piezoelectric actuator in the second direction displaces the second spring bar relative to the bearing housing.

4. The gas turbine engine according to claim 3, wherein the second direction is anti-parallel to the first direction.

5. The gas turbine engine according to claim 3 or 4, further comprising:
a third spring bar (74) that couples the bearing to the bearing housing (42), the third spring bar being configured to tune vibrations of the rotatable shaft (50);
a third piezoelectric actuator (76) disposed between the bearing housing and the third spring bar, the third piezoelectric actuator being configured to extend in a third direction;
a fourth spring bar (84) that couples the bearing to the bearing housing, the fourth spring bar being configured to tune vibrations of the rotatable shaft;
a fourth piezoelectric actuator (86) disposed between the bearing housing and the fourth spring bar, the fourth piezoelectric actuator being configured to extend in a fourth direction,
wherein extension of the third piezoelectric actuator in the third direction displaces the third spring bar relative to the bearing housing,
wherein extension of the fourth piezoelectric actuator in the fourth direction displaces the fourth spring bar relative to the bearing housing, and
wherein the third spring bar and the fourth spring bar couple the bearing to the bearing housing at positions opposite one another with respect to the axis of rotation of the bearing.

6. The gas turbine engine according to claim 5, wherein the fourth direction is anti-parallel to the third direction.

7. The gas turbine engine according to claim 5 or claim 6, wherein the first spring bar (52), the second spring bar (64), the third spring bar (74) and the fourth spring bar (84) are equally spaced around the bearing.

8. The gas turbine engine (10) according to claim 7, wherein the gas turbine engine further comprises:
an engine core (11) comprising a turbine (19), a compressor (14), and a core shaft (26) connecting the turbine to the compressor;
a fan (23) located upstream of the engine core, the fan comprising a plurality of fan blades; and
a gearbox (30) that receives an input from the core shaft (26) and outputs drive to the fan so as to drive the fan at a lower rotational speed than the core shaft.

9. The gas turbine engine (10) according to claim 8, wherein the turbine is a first turbine (19), the compressor is a first compressor (14), and the core shaft is a first core shaft (26);
the engine core further comprises a second turbine (17), a second compressor (15), and a second core shaft (27) connecting the second turbine to the second compressor; and
the second turbine, second compressor, and second core shaft are arranged to rotate at a higher rotational speed than the first core shaft.

10. A method of minimising out-of-balance vibrations in a bearing assembly (40) of a gas turbine engine, the bearing assembly comprising:
a bearing housing (42);
a bearing (43) located within the bearing housing having an axis of rotation and arranged to receive a rotatable shaft (50);
a first spring bar (52) that couples the bearing to the bearing housing, the first spring bar being configured to tune vibrations of the rotatable shaft; and
a first piezoelectric actuator (54) between the bearing housing and the first spring bar, the first piezoelectric actuator being configured to extend in a first direction;
the method comprising the steps of:
rotating the bearing within the bearing housing;
detecting the magnitude of vibrations received at the bearing housing due to rotation of the bearing; and
extending the piezoelectric actuator in the first direction to displace the first spring bar relative to the bearing housing to reduce the magnitude of the vibrations received at the housing.

11. The method according to claim 10, wherein the bearing assembly (40) comprises:
a second spring bar (64) that couples the bearing (43) to the bearing housing (42) at a position on the opposite side of the axis of rotation of the bearing to the first spring bar, the second spring bar being configured to tune vibrations of the rotatable shaft; and
a second piezoelectric actuator (66) disposed between the bearing housing and the second spring bar, the second piezoelectric actuator being configured to extend in a second direction;
the method further comprising the step of:
extending the second piezoelectric actuator in the second direction to displace the second spring bar relative to the bearing housing to reduce the magnitude of the vibrations received at the housing.

12. The method according to claim 11, wherein the bearing assembly (40) comprises:
a third spring bar (74) that couples the bearing (43) to the bearing housing (42), the third spring bar being configured to tune vibrations of the rotatable shaft;
a third piezoelectric actuator (76) between the bearing housing and the third spring bar, the third piezoelectric actuator being configured to extend in a third direction;
a fourth spring bar (84) that couples the bearing to the bearing housing at a position on the opposite side of the axis of rotation of the bearing to the third spring bar, the fourth spring bar being configured to tune vibrations of the rotatable shaft; and
a fourth piezoelectric actuator (86) disposed between the bearing housing and the fourth spring bar, the fourth piezoelectric actuator being configured to extend in a fourth direction;
the method further comprising the steps of:
extending the third piezoelectric actuator in the third direction to displace the third spring bar relative to the bearing housing to reduce the magnitude of the vibrations received at the housing; and
extending the fourth piezoelectric actuator in the fourth direction to displace the fourth spring bar relative to the bearing housing to reduce the magnitude of the vibrations received at the housing.

13. The method according to any one of claims 10 to 12, wherein the step of detecting the amplitude of vibrations received at the bearing housing (42) due to rotation of the bearing (43) is performed by an accelerometer (100) coupled to the bearing housing and arranged to provide an output proportional to the magnitude of vibrations received at the bearing housing.
